# EUROPÄISCHE PATENTANMELDUNG

(11) **EP 2 322 364 A1**
(43) Veröffentlichungstag der Anmeldung: **18.05.2011**
(21) Anmeldenummer: 10004553.3
(22) Anmeldetag: 30.04.2010
(51) Int. Cl.: B60D 5/00, B61D 17/22

(54) **Gelenkfahrzeug, insbesondere Hochgeschwindigkeitsschienenfahrzeug**

(30) Priorität: 11.11.2009 EP 09014112; 27.11.2009 EP 09014769; 16.04.2010 EP 10004048
(71) Anmelder: Hübner GmbH, 34123 Kassel (DE)
(72) Erfinder: Zolotov, Roman, 34123 Kassel (DE)
(74) Vertreter: Walther, Walther & Hinz GbR

(57) **Zusammenfassung**

Gelenkfahrzeug, insbesondere Hochgeschwindigkeitsschienenfahrzeug, umfassend mindestens zwei gelenkig miteinander verbundene Fahrzeugteile, die durch einen Übergang (10) mit mindestens einem Balg (11) miteinander in Verbindung stehen, wobei der Balg (11) an der Balgseitenwand (11a) und/oder an der Balgdecke (11b) auf der Innenseite Mittel (30) zur Versteifung der Seitenwand und/oder Balgdecke in Richtung quer zur Längsachse des Fahrzeugs aufweist.

## Beschreibung

Die Erfindung betrifft ein Gelenkfahrzeug, insbesondere ein Hochgeschwindigkeitsschienenfahrzeug, umfassend mindestens zwei gelenkig miteinander verbundene Fahrzeugteile, die durch einen Übergang mit mindestens einem Balg miteinander in Verbindung stehen.

Gelenkfahrzeuge, insbesondere Hochgeschwindigkeitsfahrzeuge sind aus dem Stand der Technik hinreichend bekannt. Bekanntester Vertreter solcher Hochgeschwindigkeitsschienenfahrzeuge ist der unter dem Begriff "ICE" bekannte Zug. Ein solcher Zug fährt mit Geschwindigkeiten von 300 Km/h und mehr. Um mit einer solchen Geschwindigkeit über größere Strecken fahren zu können, sind die Schienenstränge im Wesentlichen mit geringen Kurvenradien verlegt. Dies macht es erforderlich, dass der Zug eine Vielzahl von Tunnel passieren muss. Insbesondere bei der Einfahrt in und bei der Ausfahrt aus einem Tunnel wirken auf den Zug Druck- bzw. Sogkräfte von bis zu 8000 Pascal. In gleicher Weise wird ein Druck auf den Zug ausgeübt, wenn zwei Züge in gegenläufiger Richtung einander passieren. Um zu verhindern, dass sich im Bereich des Übergangs zwischen den gelenkig miteinander verbundenen Fahrzeugteilen eines solchen Hochgeschwindigkeitszuges die Druckwelle bis in das Fahrzeuginnere fortsetzt, sind derartige Hochgeschwindigkeitszüge üblicherweise mit zwei beabstandet zueinander angeordneten Bälgen versehen.

Allerdings hat sich herausgestellt, dass der äußere Balg aufgrund des Einflusses der Druckwelle eine erhebliche Bewegung in Richtung auf den inneren Balg ausführt, was dazu führt, dass sich die Druckwelle in gewissem Umfang auf den inneren Balg überträgt, der dann ebenfalls das Bestreben hat, nach innen auszubauchen. Dies ist unangenehm für Personen, die sich zum Zeitpunkt der Einfahrt in einen Tunnel gerade auf der Übergangsbrücke des Übergangs zwischen zwei Fahrzeugteilen befinden.

Die der Erfindung zugrunde liegende Aufgabe besteht demzufolge darin, zu verhindern, dass sich der äußere Balg in Bezug auf die Seitenwände und auch die Decke unter dem Einfluss einer Druckwelle wesentlich seitlich verformen.

Zur Lösung der Aufgabe wird erfindungsgemäß vorgeschlagen, dass die Balgseitenwand und/oder Balgdecke auf der Innenseite Mittel zur Versteifung der Seitenwand und/oder der Balgdecke in Richtung quer zur Längsachse des Fahrzeugs aufweisen.

Derartige Mittel zur Versteifung des Balges sorgen dafür, dass, wenn sie etwa mittig auf der Balginnenseite der Balgseitenwand oder auf der Innenseite der Balgdecke angeordnet sind, sich der Balg weder wesentlich einbaucht noch wesentlich ausbaucht.

Weitere vorteilhafte Merkmale der Erfindung ergeben sich aus den Unteransprüchen.

In diesem Zusammenhang ist insbesondere vorgesehen, dass der mindestens eine Balg außenhautbündig zu der Außenkontur des Wagenkastens der Fahrzeugteile verläuft. Dies vor folgendem Hintergrund: Üblicherweise ist es so, dass im Bereich des Übergangs der äußere Balg einen nicht unerheblichen Abstand zu der Außenhaut der beiden benachbarten Wagenkästen aufweist. Hierdurch entsteht eine nicht unerhebliche Wirbelbildung, die zu Strömungsverlusten aufgrund von Turbulenzen an dem Fahrzeug führt. Dadurch, dass der mindestens eine äußere Balg außenhautbündig zu der Außenkontur des Wagenkastens verläuft, wird nun eine solche Wirbelbildung minimiert. Die Wirbelbildung wird noch dadurch weiterhin minimiert, dass der äußere Balg auf seiner Innenseite die bereits zuvor beschriebenen Mittel zur Versteifung der Seitenwand bzw. auch der Balgdecke aufweist. Bei zwei ineinander gelagerten Bälgen ist insofern vorgesehen, dass die beiden Bälge, die seitlich beabstandet zueinander zwischen den Fahrzeugteilen angeordnet sind, einen Abstand derart aufweisen, dass das Mittel zur Versteifung selbst noch einen Abstand zu dem inneren Balg aufweist.

Die Wirbelbildung auf der Außenseite des Balges wird noch dadurch vermindert, dass der äußere Balg auf die Außenseite zugerichtete Wellen aufweist. Das heißt, dass ein solcher Balg, wenn insbesondere die einzelnen Wellen eine Ebene bilden, keine Wirbelbildung im Bereich des Übergangs, also im Bereich des äußeren Balges zwischen zwei Fahrzeugteilen entstehen kann.

Im Zusammenhang weist ein Balg mit auf die Außenseite zugerichteten Wellen auf der Innenseite des Balges die im Querschnitt U-profilförmigen Rahmenleisten auf, die die einzelnen Wellen oder Falten eines solchen Balges verbinden. Weiterhin vorteilhaft ist, wenn das Mittel zur Versteifung als parallel zur Längsachse des Fahrzeugs sich erstreckender Balgansatz ausgebildet ist, der etwa mittig an der Seitenwand und/oder Balgdecke angeordnet ist. Im Einzelnen ist in diesem Zusammenhang vorgesehen, dass der insbesondere bauchartig ausgebildete Balgansatz über seine Länge mehrere bauchartig gebogene, im Querschnitt U-profilförmige Ansatzleisten aufweist, die untereinander selbst durch Falten oder Wellen miteinander verbunden sind. Die Ansatzleisten des Balgansatzes sind hierbei an beiden Enden mit den Rahmenleisten des Balges verbunden, sodass sich in Bezug auf die Ansatzleisten des Balgansatzes eine im Wesentlichen geschlossene Kontur ergibt. Gerade eine solche geschlossene Kontur in Verbindung mit die einzelne Ansatzleisten verbindende Falten oder Wellen führt zu der erhöhten Stabilität eines solchen Balges gegenüber einem äußeren Kraftangriff, beispielsweise dadurch, dass bei einer Tunneleinfahrt eine Druckwelle auf den Balg auftrifft. In diesem Zusammenhang kann auch vorgesehen sein, dass mindestens eine, vorzugsweise mehrere Falten- oder Wellenbalgstücke durch die Ansatzleisten entlang der Länge der Ansatzleisten des Balgansatzes erfasst sind. Das heißt, dass die einzelnen Ansatzleisten, die schlussendlich den Balgansatz bilden, nicht durch über die Länge des Balgansatzes durchgängige Wellen- oder Falten verbunden sein müssen, vielmehr reicht es für die Erzielung einer ausreichenden Stabilität auch aus, wenn die einzelnen Ansatzleisten untereinander durch ― wie bereits ausgeführt ― Falten- oder Wellenbalgstücke verbunden sind. Eine insbesondere durchgängige Verbindung der einzelnen Ansatzrahmen durch Falten- oder Wellenelemente hat allerdings noch den Vorteil einer zusätzlichen Schalldämmung.

Anhand der Zeichnungen wird die Erfindung nachstehend beispielhaft näher erläutert.

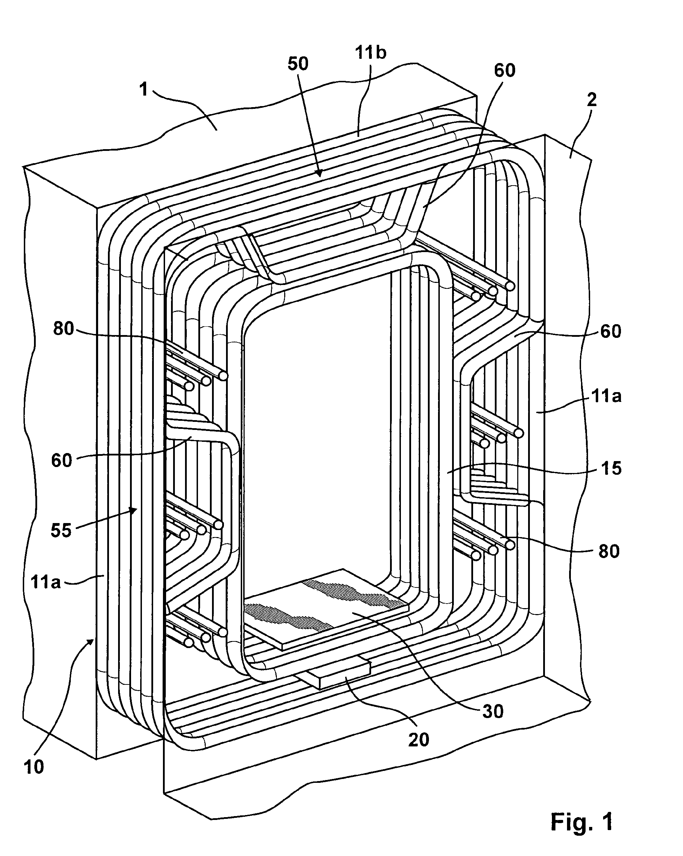

Bei der Darstellung gemäß Fig. 1 sind die beiden Wagenkästen, die durch einen Übergang 10 verbunden sind, mit 1 und 2 bezeichnet. Der Übergang 10 umfasst im Einzelnen zwei Bälge, nämlich einen äußeren Wellenbalg 11, und einen inneren, dazu beabstandet angeordneten Wellenbalg 15. Der äußere Balg 11 umschließt, wie bereits ausgeführt, den inneren Balg, und zusätzlich auch die Wagenkupplung, die schematisch dargestellt und mit 20 bezeichnet ist. Der innere Balg umschließt die Übergangsbrücke, die ebenfalls nur schematisch dargestellt ist und mit 30 bezeichnet ist.

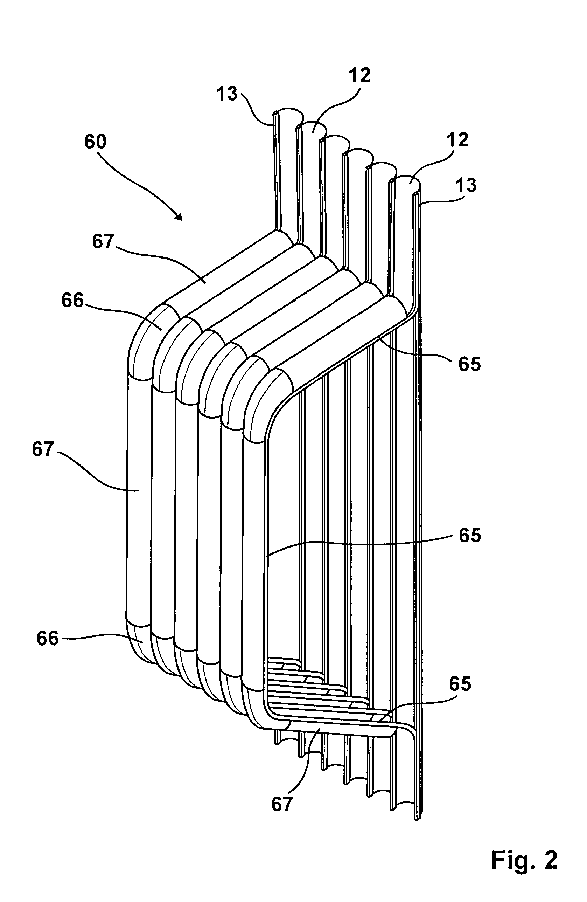

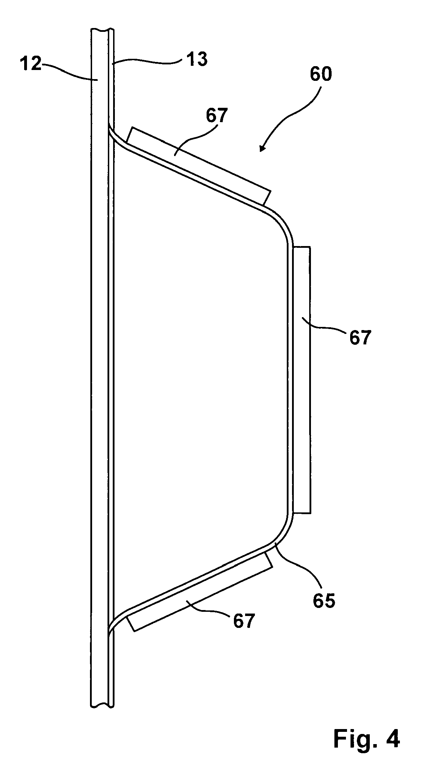

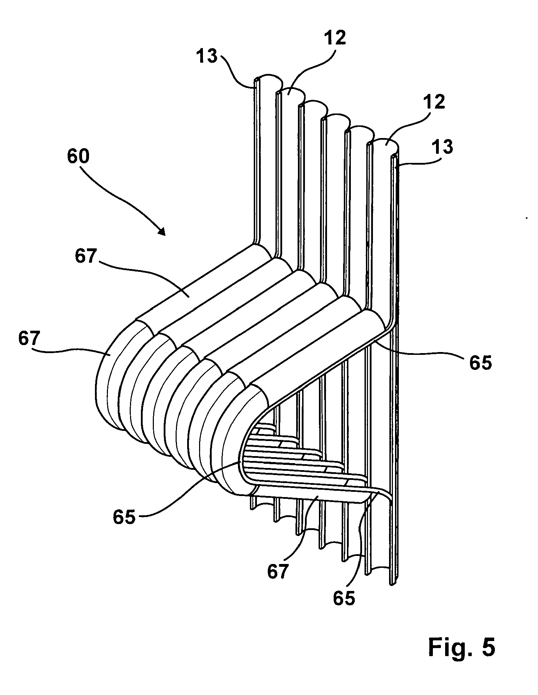

Relevant für die Erfindung ist die Ausbildung des äußeren Balges 11 des Übergangs 10. Der Balg 11 ist, wie bereits ausgeführt, als Wellenbalg ausgebildet, mit nach außen ausgebildeten Wellen, wobei sich der äußere Wellenbalg außenhautbündig im Bereich der Seitenwände und der Decke
- Fig. 1: zeigt perspektivisch einen Übergang zwischen den Wagenkästen zweier gelenkig miteinander verbundener Fahrzeuge;
- Fig. 2: zeigt einen Balgansatz gemäß Fig. 1 in einer ersten Ausführungs- form;
- Fig. 3: zeigt eine zweite Ausführungsform eines Balgansatzes;
- Fig. 4: zeigt eine Seitenansicht der Ausführungsform des Balgansatzes gemäß Fig. 3.
zu den Wagenkästen 1 und 2 gestaltet ist. Es wurde bereits an anderer Stelle erläutert, dass bei Einsatz eines derartigen Überganges in Hochgeschwindigkeitszügen auf den äußeren Balg erhebliche Drücke von bis zu 8000 Pascal einwirken. Unter Einwirkung dieses Druckes bewegt sich, bei zum Beispiel einer Tunneleinfahrt, der Balg mit Seitenwänden 11 a und Decke 11 b in Richtung der Pfeile 50 und 55. Die Folge hiervon ist, dass auch die Seitenwände und die Decke des inneren Balges zwar vermindern, aber ebenso eine solche Bewegung ausführen. Gegenstand der Erfindung ist nun die Anordnung von Mitteln an bzw. auf der Innenseite sowohl der Seitenwände als auch auf der Innenseite der Balgdecke des äußeren Balges, die eine Versteifung des Balges bewirken. Hierzu vorgesehen sind auf der Balginnenseite sowohl der Seitenwände 11a als auch der Decke 11 b angeordnete Balgansätze 60. Die Balgansätze 60 sind jeweils etwa mittig auf der Länge sowohl der Seitenwände als auch der Balgdecke angeordnet. Die Kontur der Balgansätze 60 ist etwa trapezförmig, wie sich dies auch im Einzelnen in Anschauung der Figuren 2, 3 und 4 ergibt, die verschiedene Varianten der Balgansätze zeigen. Die Balgansätze können jedoch auch nahezu dreieckförmig ausgestaltet sein, wie sich dies aus Fig. 5 ergibt. Die Anordnung der Balgansätze und die Größe der Balgansätze sind in jedem Fall so, dass zwischen den Fahrzeugen verlaufende Versorgungsleitungen 80 zwischen dem äußeren und dem inneren Balg geführt werden können, wie sich dies in Anschauung von Fig. 1 ergibt.

Der äußere Balg 11 umfasst einzelne, nach außen gerichtete Wellen 12, wobei die einzelnen Wellen durch Rahmenleisten 13 miteinander in Verbindung stehen. Die Rahmenleisten 13 sind im Querschnitt U-förmig ausgebildet und verlaufen über den Umfang des äußeren Balges, wie dies an sich bereits aus dem Stand der Technik bekannt ist. Der Balgansatz 60 umfasst mehrere hintereinander angeordnete Ansatzleisten 65, die endseitig jeweils auf den Rahmenleisten 13 aufgebracht sind. Die Verbindung zwischen den Rahmenleisten 13 und den Ansatzleisten oder Ansatzrahmen rahmen 65 erfolgt beispielsweise über eine Clinch- oder Pressverbindung. Denkbar sind allerdings auch Niet- und andere Verbindungsverfahren, wie z. B. Kleben. Die einzelnen Ansatzleisten 65, die mit den Rahmenleisten des Balges eine geschlossene Kontur bilden, sind nach der Ausführungsform wie in Fig. 2 dargestellt durch durchgehende Wellen 66 aus beschichteten Stoffbahnen miteinander verbunden. Die Verbindung der einzelnen Ansatzleisten untereinander ist für die Versteifungswirkung maßgeblich, ganz ähnlich wie die Bildung einer geschlossenen Kontur der Ansatzleisten mit den Rahmenleisten.

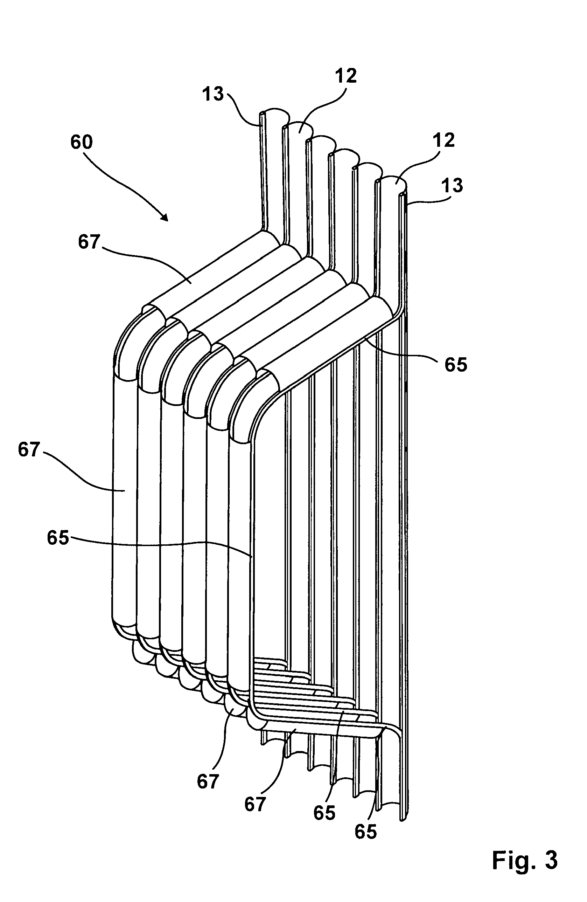

Bei der Ausführungsform gemäß Figur 3 sind die einzelnen Ansatzleisten 65 durch einzelne Wellenelemente 67 untereinander verbunden, wobei die einzelnen Wellenelemente beabstandet zueinander als beschichtete Stoffbahnen über die Länge des jeweiligen Ansatzrahmens angeordnet sind. Obwohl nicht dargestellt, können die Wellenelemente auch nur auf einen Teil der Länge der Ansatzrahmen angeordnet sein. Wesentlich ist für die Stabilität ausschließlich, dass Verbindungselemente zwischen den einzelnen Ansatzrahmen vorhanden sind. Die Wirkung der Versteifung wird auch hier insbesondere dadurch erzielt, dass die einzelnen Ansatzrahmen 65 durch die Wellenelemente 67 verbunden sind. Grundsätzlich bleibt darauf hinzuweisen, dass nicht nur wellenförmige Elemente die Verbindung zwischen den Ansatzrahmen bewirken können, sondern beispielsweise auch Falten. Es muss lediglich eine flächige Verbindung vorhanden sein, die in der Lage ist, der Bewegung des Balges insgesamt nachzugeben, wie dies der Fall ist, wenn ein solcher Balg Nick-, Wank- und Knickbewegungen ausführen muss.

## Patentansprüche

1. Gelenkfahrzeug, insbesondere Hochgeschwindigkeitsschienenfahrzeug, umfassend mindestens zwei gelenkig miteinander verbundene Fahrzeugteile, die durch einen Übergang (10) mit mindestens einem Balg (11) miteinander in Verbindung stehen,
**dadurch gekennzeichnet,**
**dass** der Balg (11) an der Balgseitenwand (11 a) und/oder an der Balgdecke (11 b) auf der Innenseite Mittel (30) zur Versteifung der Seitenwand und/oder Balgdecke in Richtung quer zur Längsachse des Fahrzeugs aufweist.

2. Gelenkfahrzeug nach Anspruch 1,
**dadurch gekennzeichnet,**
**dass** der mindestens eine Balg (11) außenhautbündig zu der Außenkontur des Wagenkastens (1, 2) verläuft.

3. Gelenkfahrzeug nach einem der voranstehenden Ansprüche,
**dadurch gekennzeichnet,**
**dass** zwei ineinander gelagerte Bälge vorgesehen sind, wobei die beiden Bälge (11, 15) beabstandet zueinander zwischen den Fahrzeugteilen angeordnet sind.

4. Gelenkfahrzeug nach einem der voranstehenden Ansprüche,
**dadurch gekennzeichnet,**
**dass** der äußere Balg (11) auf die Außenseite zugerichtete Wellen (12) aufweist.

5. Gelenkfahrzeug nach einem der voranstehenden Ansprüche,
**dadurch gekennzeichnet,**
**dass** die einzelnen Wellen (12) des Balges (11) durch im Querschnitt U-profilförmige Rahmenleisten (13) gehalten sind, die auf der Innenseite des Balges (11) angeordnet sind.

6. Gelenkfahrzeug nach einem der voranstehenden Ansprüche,
**dadurch gekennzeichnet,**
**dass** das Mittel zur Versteifung als ein parallel zur Längsachse des Fahrzeugs sich erstreckender Balgansatz (60) ausgebildet ist.

7. Gelenkfahrzeug nach einem der voranstehenden Ansprüche,
**dadurch gekennzeichnet,**
**dass** der Balgansatz (60) bauchartig ausgebildet ist.

8. Gelenkfahrzeug nach einem der voranstehenden Ansprüche,
**dadurch gekennzeichnet,**
**dass** der Balgansatz (60) über seine Länge mehrere bauchartig gebogene, im Querschnitt U-profilförmige Ansatzleisten (65) aufweist, die untereinander durch Falten oder Wellen (66) verbunden sind.

9. Gelenkfahrzeug nach einem der voranstehenden Ansprüche,
**dadurch gekennzeichnet,**
**dass** die Ansatzleisten (65) des Balgansatzes (60) endseitig mit den Rahmenleisten (13) des Balges (11) verbunden sind, sodass sich eine geschlossene Kontur ergibt.

10. Gelenkfahrzeug nach einem der voranstehenden Ansprüche,
**dadurch gekennzeichnet,**
**dass** mindestens eine, vorzugsweise mehrere Falten- oder Wellenbalgstücke (67) durch die zwei Ansatzleisten (65) entlang der Länge der Ansatzleisten des Balgansatzes (60) erfasst sind.
